# EUROPÄISCHE PATENTSCHRIFT

(11) **EP 0 463 483 B1**
(45) Veröffentlichungstag und Bekanntmachung des Hinweises auf die Patenterteilung: **31.08.1994**
(21) Anmeldenummer: 91109671.7
(22) Anmeldetag: 13.06.1991
(51) Int. Cl.: B60Q 1/04

(54) **Frontscheinwerfer**
Headlight
Phare

(30) Priorität: 27.06.1990 DE 4020364
(43) Veröffentlichungstag der Anmeldung: 02.01.1992
(73) Patentinhaber: Adam Opel Aktiengesellschaft, 65428 Rüsselsheim (DE); General Motors Espana, S.A., Figueruelas (Zaragoza) (ES)
(72) Erfinder: Reichmann, Karl-Heinz, W-6081 Stockstadt (DE); Krumb, Heinrich, W., W-6097 Trebur (DE); Mildner, Udo, W-6250 Limburg-Linter (DE); Winkler, Gerold, W-6234 Hattersheim (DE)
(74) Vertreter: Bergerin, Ralf, Dipl.-Ing.

(56) Entgegenhaltungen:
- DE-A- 2 721 554
- DE-A- 3 629 124
- FR-A- 2 482 537
- FR-A- 2 620 090

## Beschreibung

Die Erfindung betrifft einen Frontscheinwerfer für ein Kraftfahrzeug, welcher in eine vordere, außenseitig durch einen Kotflügel begrenzte Karosserieöffnung oberflächenbündig einsetzbar ist und kotflügelseitig eine obere Haltelasche und eine untere Haltelasche aufweist, mit denen er an Karosserieteilen durch jeweils eine in ein Langloch eingreifende Schraube befestigbar ausgebildet ist. Ein solcher Frontscheinwerfer ist beispielsweise in der DE-A-36 29 124 beschrieben.

Aus optischen Gründen ist es erforderlich, daß der Frontscheinwerfer zur angrenzenden Motorhaube und zum Kotflügel möglichst genau ausgerichtet ist, weil in diesem Bereich Maßabweichungen stark auffallen und den Eindruck einer mangelhaften Fertigungsqualität erwecken. Da beispielsweise der Kotflügel im Bereich des Frontscheinwerfers eine Toleranz von plus/minus 4 mm hat, sind bei dem bekannten Frontscheinwerfer Einstellmuttern vorgesehen, durch die ein exaktes Ausrichten des Frontscheinwerfers nach den angrenzenden Karosserieteilen möglich wird. Diese Einstellarbeiten sind jedoch arbeitsaufwendig und deshalb in der Serienfertigung nachteilig.

Der Erfindung liegt die Aufgabe zugrunde, einen Frontscheinwerfer der eingangs genannten Art so auszubilden, daß er sich beim Einbau zwangsläufig nach den angrenzenden Karosserieteilen ausrichtet, so daß ein Einstellen unnötig wird.

Diese Aufgabe wird erfindungsgemäß dadurch gelöst, daß beide Haltelaschen jeweils eine von vorn her gegen einen Anschlag des Kotflügels anlegbare Anschlagfläche aufweisen.

Durch diese Gestaltung kann man den Frontscheinwerfer bei der Montage so weit in die für ihn vorgesehene Karosserieöffnung einschieben, bis er mit seinen Anschlagflächen gegen die entsprechenden Anschläge der Karosserie anliegt. Dadurch richtet sich der Frontscheinwerfer zwangsläufig nach den angrenzenden Karosserieteilen aus, so daß ein umständliches und zeitaufwendiges Einstellen zwecks Ausgleich von Karosserietoleranzen entfällt. Der erfindungsgemäße Frontscheinwerfer ist deshalb wesentlich rascher zu montieren als bekannte Scheinwerfer. Dennoch ist er einfacher aufgebaut, da er statt aufwendiger Einstellmittel lediglich einfach gestaltete Anschlagflächen aufweisen muß.

Die Anschlagfläche der oberen Haltelasche ist optimal gestaltet, wenn sie an der äußeren Seitenfläche der Haltelasche an ihrem rückwärtigen Ende vorgesehen ist.

Die Anschlagfläche der oberen Haltelasche vermag Toleranzen hinsichtlich der Lage des zugeordneten, karosserieseitigen Anschlags in besonders hohen Maße auszugleichen, wenn sie durch einen, am rückwärtigen Ende der äußeren Seitenfläche der Haltelasche, nach außen gerichteten Steg gebildet ist.

Bei einem Frontscheinwerfer, bei dem die untere Haltelasche u-förmig ausgebildet ist, wobei der obere Schenkel mit seiner Seitenfläche am Scheinwerfergehäuse angeformt ist und der untere Schenkel das Langloch für die der Befestigung dienenden Schraube aufweist, ist es vorteilhaft, wenn die Anschlagfläche der unteren Haltelasche an der Vorderseite des oberen Schenkels zumindest in etwa rechtwinklig zum oberen Schenkel nach unten hin gerichtet ist.

Die Passung des Frontscheinwerfers zum Kühlergitter läßt sich dadurch auf sehr einfache Weise erreichen, daß an der inneren Seitenfläche des Scheinwerfergehäuses eine nach vorn hin ausgerichtete Anschlagfläche vorgesehen ist, gegen welche das Kühlergitter des Kraftfahrzeugs mit einer an ihm angeformten Rippe anlegbar ist und wenn an der inneren Seitenfläche des Scheinwerfergehäuses eine nach rückwärts gerichtete, gegen ein Karosserieteil abstützbare, das Scheinwerfergehäuse nach vorn hin abstützende Feder vorgesehen ist. Diese Feder verhindert ein überdrücken des Frontscheinwerfers.

Bei der Feder kann es sich zur weiteren Kosteneinsparung um eine schräg nach hinten gerichtete Blattfeder handeln.

Da das Scheinwerfergehäuse meist aus Kunststoff gefertigt ist, kann man gemäß einer weiteren Ausgestaltung der Erfindung die Feder einstückig mit dem Scheinwerfergehäuse ausbilden.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Vorderansicht eines Frontscheinwerfers mit den angrenzenden Bauteilen eines Kraftfahrzeugs,
- Fig. 2: einen im Maßstab gegenüber Figur 1 vergrößerten, senkrechten Schnitt entlang der Linie II - II in Figur 1,
- Fig. 3: eine Draufsicht auf die Anordnung nach Fig. 2,
- Fig. 4: einen im Maßstab gegenüber Figur 1 vergrößerten, senkrechten Schnitt entlang der Linie IV - IV in Figur 1,
- Fig. 5: einen im Maßstab gegenüber Figur 1 vergrößerten, horizontalen Schnitt entlang der Linie V - V in Figur 1,
- Fig. 6: einen im Maßstab gegenüber Figur 1 vergrößerten, horizontalen Schnitt entlang der Linie VI - VI.

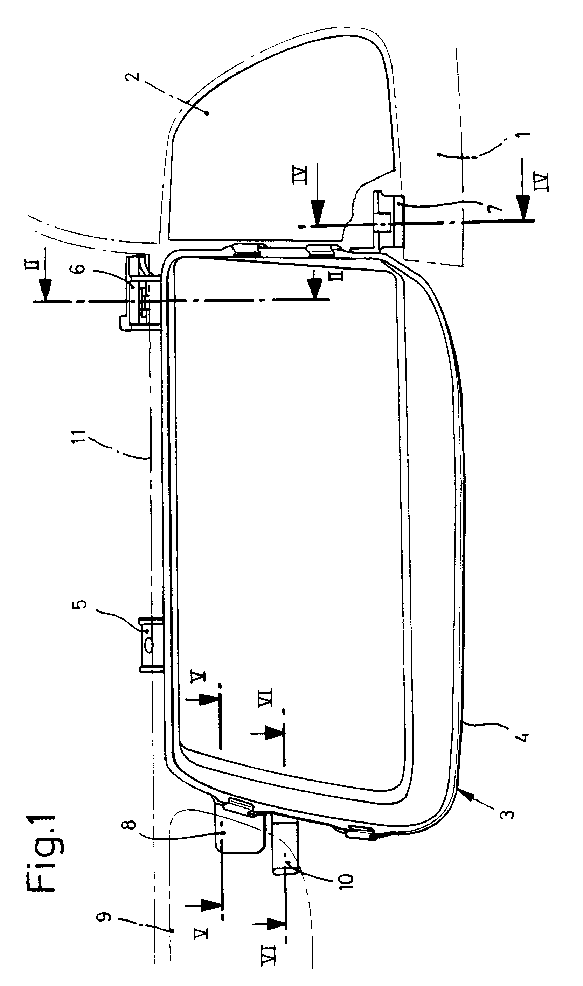

Die Figur 1 zeigt von einem Kraftfahrzeug strichpunktiert von vorn teilweise einen linken Kotflügel 1, in welchem eine ebenfalls strickpunktiert dargestellte Blinkleuchte 2 befestigt ist. Zur Fahrzeugmitte hin grenzt an der Blinkleuchte 2 ein Frontscheinwerfer 3 an, dessen Scheinwerfergehäuse 4 mittels Haltelaschen 5, 6, 7 am Kraftfahrzeug befestigt ist. An der linken, der Blinkleuchte 2 abgewandten Seitenfläche des Scheinwerfergehäuses 4, ist eine Anschlagfläche 8 angeformt, gegen die ein strichpunktiert angedeutetes Kühlgitter 9 von vorn her anliegt. Eine Feder 10, welche unterhalb der Anschlagfläche 8 ebenfalls an der Seitenfläche des Scheinwerfergehäuses 4 angeformt ist, stützt sich nach hinten hin gegen ein nicht gezeigtes Teil der Karosserie ab und spannt den Frontscheinwerfer 3 dadurch nach vorn hin vor, so daß seine Anschlagfläche 8 gegen das Kühlgitter 9 anliegt. Ebenfalls strichpunktiert angedeutet ist in Figur 1 eine Motorhaube 11 des Kraftfahrzeugs, die bis oberhalb des Frontscheinwerfers 3 reicht.

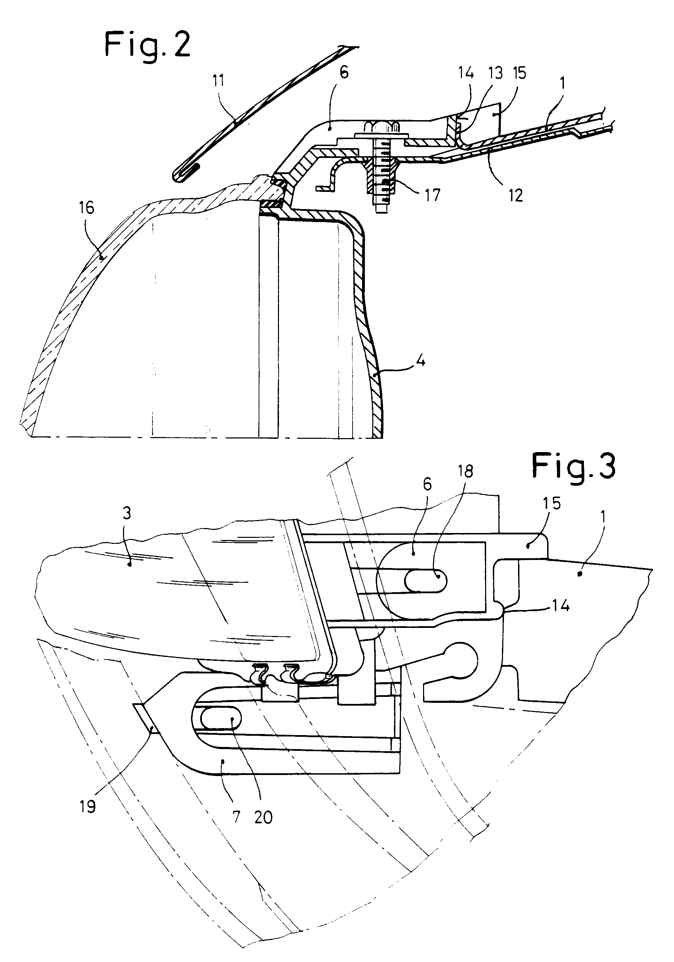

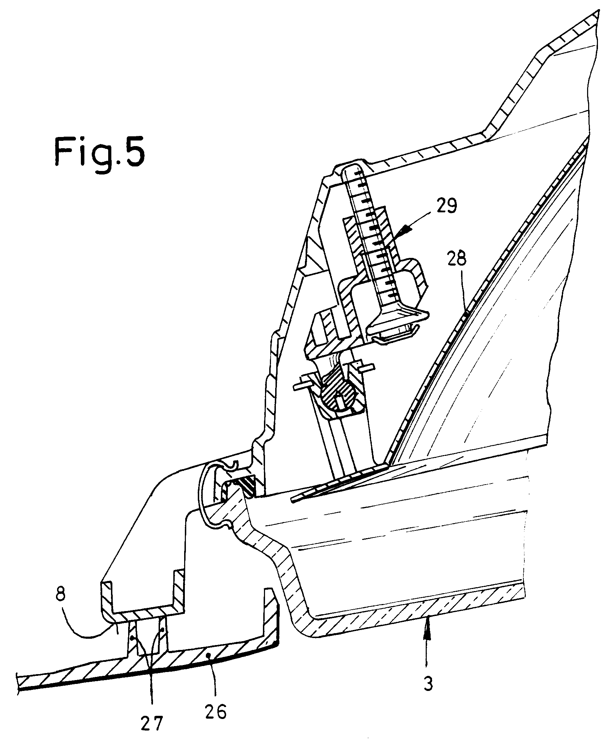

Die Figur 2 läßt erkennen, wie das Scheinwerfergehäuse 4 mit der oberen Haltelasche 6 mit der in Figur 2 mit 12 positionierten Karosserie des Kraftfahrzeugs verbunden ist. Wichtig ist, daß der Kotflügel 1 in diesem Bereich einen nach oben gerichteten Vorsprung 13 hat, gegen den eine Anschlagfläche 14 am rückwärtigen Ende der äußeren Seitenfläche der Haltelasche 6 anliegt. Die Haltelasche 6 ragt mit einem Flügel 15 über diese Anschlagfläche 14 hinaus. Dieser Flügel 15 dient dazu, den seitlichen Abstand des Frontscheinwerfers 3 vom Kotflügel 1 festzulegen, während die Anschlagfläche 14 die Aufgabe hat sicherzustellen, daß eine Streuscheibe 16 des Frontscheinwerfers 3 oberflächenbündig mit der Motorhaube 11 und dem Kotflügel 1 ausgerichtet ist.

Die Figur 2 zeigt weiterhin, daß durch die Haltelasche 6 eine Schraube 17 in die Karosserie 12 geschraubt ist, um die Haltelasche 6 mit der Karosserie 12 zu verbinden. Diese feste Verbindung erfolgt jedoch erst, wenn die Anschlagfläche 14 gegen den Vorsprung 13 und der Flügel 15 gegen einen entsprechenden Anschlag anliegt und der Frontscheinwerfer 3 durch eine weitere, noch zu beschreibende Anschlagfläche ausgerichtet ist.

Die Draufsicht gemäß Figur 3 zeigt, wie die obere Haltelasche 6 mit der Anschlagfläche 14 und gleichzeitig mit dem Flügel 15 gegen den Kotflügel 1 anliegt. Weiterhin ist ein Langloch 18 in der oberen Haltelasche 6 zu erkennen, durch welches die in Figur 2 gezeigte Schraube 17 in den Kotflügel 1 geschraubt wird, um die Haltelasche 6 mit ihm zu verbinden.

Auch die untere Haltelasche 7 ist in Figur 3 zu erkennen. Sie hat an ihrer Vorderseite eine nach unten gerichtete Anschlagfläche 19, mit der sie beim Einschieben des Frontscheinwerfers 3 von vorn her gegen den Kotflügel 1 gelangt. Genau wie die obere Haltelasche 6, hat die untere Haltelasche 7 ein Langloch 20, durch welches eine in Figur 3 nicht gezeigte Schraube zu führen ist, um eine feste Verbindung zu erzeugen.

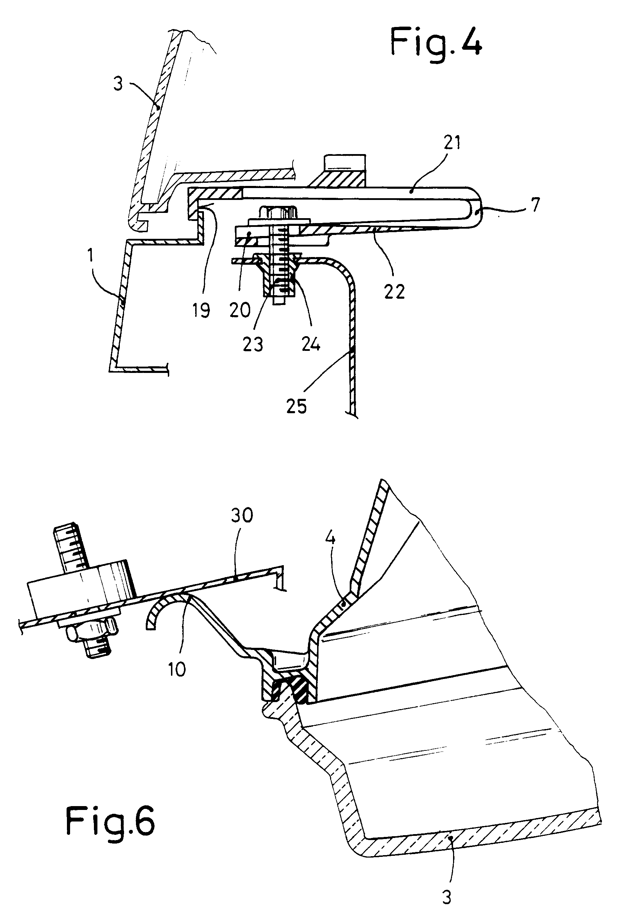

In Figur 4 ist zu sehen, daß die untere Haltelasche 7 u-förmig ausgebildet ist. Ihr oberer Schenkel 21 ist fest mit dem Frontscheinwerfer 3 verbunden und weist an seinem vorderen Ende die Anschlagfläche 19 auf, welche von vorn her gegen den Kotflügel 1 gelangt. Ihr unterer Schenkel 22 hat das Langloch 20, durch welches eine Schraube 23 in eine Gewindebuchse 24 eines karosserieseitigen Halters 25 führt.

Die Figur 5 verdeutlicht, wie ein Kühlergitter 26 mit zwei rückwärtigen Rippen 27 gegen die Anschlagfläche 8 an der Innenseite des Frontscheinwerfers 3 anliegt. Dadurch wird der Frontscheinwerfer 3 vom Kühlergitter 26 in diesem Bereich nach hinten gedrückt. Zum Gesamtverständnis ist in Figur 5 des weiteren ein Reflektor 28 des Frontscheinwerfers 3 gezeigt, welcher mittels einer Einstelleinrichtung 29 auszurichten ist.

In Figur 6 ist zu sehen, daß die Feder 10 als Blattfeder am Scheinwerfergehäuse 4 angeformt ist und sich gegen ein Karosserieteil 30 abstützt. Dadurch wird der Frontscheinwerfer 3 mit der in Figur 5 gezeigten Anschlagfläche 8 gegen das ebenfalls dort zu sehende Kühlergitter 26 gehalten.

## Patentansprüche

1. Frontscheinwerfer für ein Kraftfahrzeug, welcher in eine vordere, außenseitig durch einen Kotflügel begrenzte Karosserieöffnung oberflächenbündig einsetzbar ist und kotflügelseitig eine obere Haltelasche und eine untere Haltelasche aufweist, mit denen er an Karosserieteilen durch jeweils eine in ein Langloch eingreifende Schraube befestigbar ausgebildet ist, dadurch gekennzeichnet, daß beide Haltelaschen (6, 7) jeweils eine von vorn her gegen einen Anschlag des Kotflügels (1) anlegbare Anschlagfläche (14, 19) aufweisen.

2. Frontscheinwerfer nach Anspruch 1, dadurch gekennzeichnet, daß die Anschlagfläche (14) der oberen Haltelasche (6) von der äußeren Seitenfläche der Haltelasche (6) an ihrem rückwärtigen Ende vorgesehen ist.

3. Frontscheinwerfer nach Anspruch 2, dadurch gekennzeichnet, daß die Anschlagfläche (14) durch einen am rückwärtigen Ende der äußeren Seitenfläche der Haltelasche (6) nach außen gerichteten Steg gebildet ist.

4. Frontscheinwerfer nach Anspruch 1, bei dem die untere Haltelasche u-förmig ausgebildet ist, wobei der obere Schenkel mit seiner Seitenfläche am Scheinwerfergehäuse angeformt ist und der untere Schenkel das Langloch für die der Befestigung dienenden Schraube aufweist, dadurch gekennzeichnet, daß die Anschlagfläche (19) der unteren Hattelasche (7) an der Vorderseite des oberen Schenkels (21), zumindest in etwa rechtwinklig zum oberen Schenkel (21), nach unten hin gerichtet ist.

5. Frontscheinwerfer nach zumindest einem der vorangehenden Ansprüche, dadurch gekennzeichnet, daß an der inneren Seitenfläche des Scheinwerfergehäuses (4) eine nach vorn hin ausgerichtete Anschlagfläche (8) vorgesehen ist, gegen welche das Kühlergitter (26) des Kraftfahrzeugs mit einer an ihm angeformten Rippe (27) anlegbar ist und daß an der inneren Seitenfläche des Scheinwerfergehäuses (4) eine nach rückwärts gerichtete, gegen ein Karosserieteil abstützbare, das Scheinwerfergehäuse (4) nach vorn hin abstützende Feder (10) vorgesehen ist.

6. Frontscheinwerfer nach Anspruch 5, dadurch gekennzeichnet, daß die Feder (10) eine schräg nach hinten gerichtete Blattfeder ist.

7. Frontscheinwerfer nach Anspruch 5, dadurch gekennzeichnet, daß die Feder (10) einstückig mit dem Scheinwerfergehäuse (4) ausgebildet ist.

## Claims

1. Front head lamp for a motor vehicle, which can be inserted flush with the surface in a front body opening delimited on the outside by a fender and which has a top and bottom retaining bracket on the fender side through which it can be fixed to body parts by means of a screw which in each case engages in an elongated hole, **characterised** in that both the retaining brackets (6, 7) nave a stop face (14, 19) which in each case can be placed from the front against a stop of the fender (1).

2. Front head lamp according to claim 1, **characterised** in that the stop face (14) of the top retaining bracket (6) is provided by the outer side face of the retaining bracket (6) at the rearward end of the same.

3. Front head lamp according to claim 2, **characterised** in that the stop face (14) is formed by an outwardly directed web on the rear end of the outer side face of the retaining bracket (6).

4. Front head lamp according to claim 1, in which the bottom retaining bracket is U-shaped, the top arm of its side face is moulded to the head lamp housing and the bottom arm contains the elongated hole for the screw attachment, **characterised** in that the front face of the top arm (21) on the stop face (19) of the bottom retaining bracket (7) is directed downwards at least approximately at right angles to the top arm (21).

5. Front head lamp according to at least one of the preceding claims, **characterised** in that the inner side face of the head lamp housing (4) is provided with a forwardly aligned stop face (8) against which can be placed a rib (27) moulded to the radiator grill (26) of the motor vehicle, and that on the inner side face of the head lamp (4) there is provided a rearwardly directed spring (10) supported by the body part and supporting the head lamp housing (4) towards the front.

6. Front head lamp according to claim 5, **characterised** in that the spring (10) is a leaf spring which is directed backwards at a slope.

7. Front head lamp according to claim 5, **characterised** in that the spring (10) is constructed in one piece with the head lamp housing (4).

## Revendications

1. Phare pour véhicule automobile monté affleurant dans une ouverture avant de la carrosserie qui est délimitée côté extérieur par un garde-boue lequel phare comporte côté garde-boue, une patte de fixation supérieure et une patte de fixation inférieure au moyen desquelles il peut être fixé sur des parties de la carrosserie par une vis qui pénètre dans un trou oblong, caractérisé par le fait que les deux pattes de fixation (6, 7) présentent chacune une surface d'appui (14, 19) qui prend appui par le devant contre une butée du garde-boue (1).

2. Phare selon la revendication 1, caractérisé par le fait que la surface d'appui (14) de la patte de fixation (6) supérieure est aménagée sur la surface latérale extérieure de la patte de fixation (6) à à l'extrémité arrière de celle-ci.

3. Phare selon la revendication 2, caractérisé par le fait que la surface d'appui (14) est constituée par un rebord tourné vers l'extérieur à l'extrémité postérieure de la surface latérale extérieure de la patte de fixation (6).

4. Phare selon la revendication 1 dans lequel la patte de fixation inférieure a une forme de U, la branche supérieure étant solidaire par sa surface latérale du corps du phare et la branche inférieure présentant le trou oblong recevant la vis de fixation, caractérisé par le fait que la surface d'appui (19) de la patte de fixation (7) inférieure à l'extrémité antérieure de la branche (21) supérieure est dirigée vers le bas au moins sensiblement à angle droit par rapport à la branche supérieure (21).

5. Phare selon l'une au moins des revendications précédentes, caractérisé par le fait qu'il est prévu sur la surface latérale intérieure du corps du phare (4) une surface d'appui (8) qui est orientée vers l'avant et contre laquelle la grille de radiateur (26) du véhicule vient en appui par une moulure (27) formée sur celle-ci et par le fait qu'il est prévu sur la surface latérale intérieure du corps de phare (4) un ressort (10) qui s'étend vers l'arrière, prend appui sur une partie de la carrosserie et repousse le corps du phare (4) vers l'avant.

6. Phare selon la revendication 5, caractérisé par le fait que le ressort (10) est un ressort à lame incliné en direction de l'arrière.

7. Phare selon la revendication 5, caractérisé par le fait que le ressort (10) est formé d'une pièce avec le corps de phare (4).
